# EUROPEAN PATENT SPECIFICATION

(11) **EP 0 574 957 B1**
(45) Date of publication and mention of the grant of the patent: **02.01.2002**
(21) Application number: 93111792.3
(22) Date of filing: 10.04.1990
(51) Int. Cl.: B01D 69/12, B01D 67/00, B01D 71/42, B01D 71/34

(54) **Acrylonitrile- and polyvinylidene fluoride-derived membranes**
Aus Acrylnitril und Polyvinylidenfluorid abgeleitete Membranen
Membranes dérivées d'acrylonitrile et de fluorure de polyvinylidène

(30) Priority: 14.04.1989 IL 89970
(43) Date of publication of application: 22.12.1993
(62) Divisional of application: 90810288.2
(73) Proprietor: MEMBRANE PRODUCTS KIRYAT WEIZMANN LTD., Rehovot 76 101 (IL)
(72) Inventor: Linder, Charles Dr., Rehovot (IL); Nemas, Mara, Neve Monoson (IL); Perry, Mordechai Dr., Petach Tikva (IL); Ketraro, Reuven, Rishon Letzion (IL)
(74) Representative: Zimmermann, Hans, Dr.

(56) References cited:
- EP-A- 0 155 173
- EP-A- 0 242 761
- DATABASE WPI Week 8529, Derwent Publications Ltd., London, GB; AN 85-174383 & JP-A-60 102 903 (NIPPON OIL SEAL IND) 7 June 1985
- PATENT ABSTRACTS OF JAPAN vol. 11, no. 115 (C-415)10 April 1987 & JP-A-61 259 707 (TOKUYAMA SODA CO LTD) 18 November 1986
- DATABASE WPI Week 8444, Derwent Publications Ltd., London, GB; Class A88, AN 1984-273748, XP002946465 & JP 59 169 512 A (NIPPON OIL SEAL IND CO LTD) 25 September 1984
- DATABASE WPI Week 8734, Derwent Publications Ltd., London, GB; Class A32, AN 1987-238073, XP002946466 & JP 62 160 109 A (FUJI PHOTO FILM CO LTD) 16 July 1987

## Description

### FIELD AND BACKGROUND OF THE INVENTION

European Patent Application No. 90810288.2, published October 24, 1990 as No. 0394193A2, relates to separation processes using composite membranes, and to such membranes per se. The composite membranes comprise an underlying membrane selected from the group consisting of microfiltration, ultrafiltration and reverse osmosis membranes; and a coating thereon comprising at least one member selected from the group consisting of polyaromatic polymers and sulfonated poly(haloalkylenes), which has been subjected to a post-coating crosslinking treatment.

The present application, which has been divided from the aforementioned European Patent Application, relates to membranes useful as the said underlying membrane in said composite membranes, as well as to separation processes using certain of said underlying membranes. In one aspect, these processes find application for separation processes in the food industry.

There exist at the present time separation problems in food processing, which cannot be adequately solved by using currently available membranes. Many such problems concern the separation of sugars, amino acids and organic acids and bases, from inorganic salts. A further problem concerns the clarification with aggressive solutes, of solutions made from fruit or vegetables; such solutes could damage the membranes in the course of time. Existing membranes have too high rejections of inorganic salts to permit a suitable separation (or if their rejections of inorganic salts is within a desired range, then their rejection of solute which it is desired to concentrate is too low); their application range is limited by their sensitivity to oxidizing agents and solvents; they are not necessarily readily sterilizable by steam or by chemical means; and they require extensive testing before being allowed to come in contact with products intended for human consumption. The present invention provides inter alia membranes which overcome the aforementioned deficiencies of the prior art membranes, and also afford additional advantages. Thus, for example, while many stable food-safe membranes are available with 80% rejections for molecular weights above 2000, few if any are available which have the desired properties indicated above and at the same time reject molecules of molecular weights below 1500.

From Patent Abstracts of Japan, Vol. 11, No. 115 (C-415) and JP-A-61 259 707 a process for the manufacture of a separation membrane for pervaporation is known in which a three-component monomer mixture consisting of vinylpyridine, a nitrile compound such as acrylonitrile and a crosslinking agent such as divinylbenzene is polymerized and the obtained membrane like substance is quaternized by a methyl iodide solution. The references thus suggest simultaneous crosslinking and membrane formation, and the disclosed process could not give rise to porous asymmetric membranes and would make the control of porosity in symmetric membranes extremely difficult.

EP-A-0 111 714 discloses a dynamic membrane on a porous polymeric carrier material. A suitable carrier material may consist of polyacrylonitriles which are chemically modified by reaction with hydroxylamine or hydroxylamine and a polyfunctional compound such as cyanuric chloride and which may optionally be pre-crosslinked. However, the described process cannot give a degree of crosslinking sufficiently high to give a structure which has a low degree of swelling in strong solvents.

The present invention provides inter alia membranes useful as the underlying membranes in composite membranes claimed in the aforesaid European Patent Application which overcome disadvantages of prior art membranes and which otherwise enable such molecular weight limits to be advantageously selected as desired. Certain of the membranes provided according to the present invention may also find utility directly in separation processes.

### SUMMARY OF THE INVENTION

It is accordingly a principal object of the present invention to provide membranes useful as components in composite membranes for effecting separations in the food processing art, and certain of which are directly useful for this purpose.

Another object of the invention is to provide such membranes which are oxidation and solvent resistant, may be readily sterilized and may safely be allowed to come in contact with products intended for human consumption.

Still another object of the invention is to provide such membranes in which molecular weight cut-off limits can be advantageously selected.

A further object of the invention is to provide novel membranes and precursors thereof per se, which find application in the food processing art.

Other objects of the invention will appear from the following description.

The present invention accordingly provides membranes as defined in claim 1. In particular, the invention provides membranes which are useful as the underlying membrane in a composite membrane formed by coating an underlying membrane and subjecting the coated membrane to a crosslinking treatment, and which are microfiltration, ultrafiltration and reverse osmosis membranes, constructed from at least one polmer selected from crosslinked acrylonitrile homopolymers and copolymers, crosslinked substituted acrylonitrile homopolymers and copolymers. The membranes which comprise at least one member selected from crosslinked acrylonitile homopolymers and copolymers, crosslinked substituted acrylonitrile homopolymers and copolymers may further be utilized in processes according to the invention for separating insoluble particles, colloidal particles and solute molecules from organic solvents, and for separating insoluble particles, colloidal particles and soluble polymers from aqueous media (e.g. juices and other extracts of fruit and vegetable origin), while permitting the passage through the membranes of any dissolved salts and organic compounds having a molecular weight less than 5000.

### DETAILED DESCRIPTION OF THE INVENTION

The membranes of the present invention include asymmetric and symmetric membranes, and are preferably of a thickness within the range of from about 10 µm to about 1 mm., average pore size in the range of from about 1 nm (10 Å) to about 5 µm, and minimum porosity about 10%. Their molecular weight cut-off preferably lies within the range of from about 200 to about 100,000 daltons. The thickness is most preferably within the range of from about 100 to about 500 µm. The preferred average pore size will in general be a function of the particular application, as for example, a pore size lying within the range of from about 2 nm (20 Å) to about 100 nm (1000 Å), more preferably from about 2 nm (20 Å) to about 20 nm (200 Å) for achievement of optimum rejection of molecules of molecular weight 1000, and flux. Its minimum porosity is most preferably greater than 50%, in order to achieve adequate flux.

As an optional feature, the membranes of the invention may be supported on a substrate, for added mechanical strength. It is to be understood that the substrate has a relatively open structure, and imparts little or no flux hindrance or rejection influence to the coated membrane.

It may be noted that crosslinking the present membranes limits their susceptibility to swelling and that they should also possess solvent, pH and temperature stability. Moreover, they should be available in a range of molecular weight cut-offs, for optimum selection to solve a given application problem.

At least one polymer selected from crosslinked acrylonitrile homopolymers and copolymers, or crosslinked substituted acrylonitrile homopolymers and copolymers, exemplified by but not restricted to polyacrylonitrile, insolubilized and crosslinked as will be described infra, may be used as the polymer of which the present membranes are comprised. Such membranes based on e.g. polyacrylonitrile afford stability to solvents, pH and temperature, over a wide range of pore sizes. They tend to be more stable to a wider variety of solvents than polyvinylidene fluoride polymers. The nitrile-derived membranes may be subjected to the steps of immersion in, or exposure to, reagents, and/or heating; as e.g., treatment with base (organic or inorganic) and heating. The conditions for treatment must be chosen so as not to destroy the structure. Tightening of the membrane may occur, but this would allow improvement in cutoffs. If excessive tightening does occur, then one may choose a more open membrane, initially.

Casting of the present membranes may be performed by any number of casting procedures cited in the literature, for example U.S. Patent Nos. 3,556,305, 3,567,810, 3,615,024, 4,029,582 and 4,188,354; GB 2,000,720; Office of Saline Water R & D Progress Report No. 357, October 1967; Reverse Osmosis and Synthetic Membranes, Ed. Sourirajan; Murari et al, J. Membr. Sci. 16: 121-135 and 181-193 (1983). Thus, the polymer or its derivatives may be dissolved in a suitable solvent or solvent mixture (e.g. NMP, DMF, DMSO, hexamethylphosphoramide, N,N-dimethylacetamide, dioxane), which may or may not contain cosolvents, partial solvents, nonsolvents, salts, surfactants or electrolytes, for altering or modifying the membrane morphology and its flux and rejection properties (e.g. acetone, ethanol, methanol, formamide, water, methyl ethyl ketone, triethyl phosphate, sulfuric acid, HCl, partial esters of fatty acids and sugar alcohols, or their ethylene oxide adducts, sodium dodecyl sulfate, sodium dodecylbenzene sulfonate, NaOH, KCl, zinc chloride, calcium chloride, lithium nitrate, LiCl, magnesium perchlorate, etc.).

The casting solution may be filtered by any of the known processes (e.g. pressure filtration through microporous filters, or by centrifugation), and cast on a support such as glass, metal, paper, plastic, etc., from which it may then be removed. It is preferred, however, to cast onto a porous substrate from which the membrane is not removed. Such porous substrates may be non-woven, or woven, including cellulosics, polyethylene, polypropylene, nylon, vinyl chloride homo- and co-polymers, polystyrene, polyesters such as polyethylene terephthalate, polyvinylidene fluoride, polytetrafluoroethylene, glass fibers, porous carbon, graphite, inorganic membranes based on alumina and/or silica (possibly coated with zirconium oxides). The membrane may alternatively be formed as a hollow fiber or tubelet, not requiring a support for practical use; or the support may be of such shape, and the membrane is cast internally thereon.

The concentration of polymer in the casting solution may vary as a function of its MW and additives, and may be for example, within the range of about 5-80%, preferably about 10-50%, most preferably about 15-30%. The casting temperature may vary from about -20 to about 100°C, preferably about 0 to 60°C, depending on the particular polymer, its molecular weight and the cosolvents and additives in the casting solution.

The casting solution may be applied to the above-mentioned supports or porous substrates by any of the well-known techniques which are familiar to those skilled in the art. The wet film thickness may lie within the range of about 15 µm (microns) to about 5 mm., preferably about 50 to about 800 µm (microns), most preferably about 100 to about 500 µm (microns) for flat membranes; tubelets may of course have thicker walls. The wet supported film may be immersed immediately, or after a partial drying step (of from about 5 secs. to about 48 hours, under ambient conditions or elevated temperature and/or under vacuum), in a gelling bath of a non-solvent. Such baths generally comprise water, to which there may optionally be added a small percentage of a solvent (e.g. DMF or NMP) and/or surfactant (e.g. sodium dodecyl sulfate), at a temperature within the range of about 0 to about 70°C. An example of a widely used gelling bath is water with 0.5% sodium dodecyl sulfate at 4°C. In another mode of forming membranes, a polymer solution containing a component which may be leached out in water or other solvent, is cast and dried prior to immersion; the subsequent immersion step removes leachable material, resulting in a porous membrane. In a third variation, a polymer solution without any leachable materials is cast and taken to dryness, resulting in a porous membrane by virtue of the physicochemical properties of the particular polymer and solvent and/or other ingredients present in the casting solution, whereby pores are created. The foregoing cast membranes may then be coated, and optionally otherwise modified, as described elsewhere herein.

Other processes for making UF and MF are extrusion and controlled thermostretching and cooling cycles.

As mentioned above, the present solvent- and pH-resistant membranes comprise in one preferred case, cross-linked acrylonitrile homo- and co-polymers in the RO, UF and MF ranges, and include asymmetric and symmetric membranes. These polymers may be formed into membranes of about 10 µm (microns) to 1 mm. thickness, by casting alone or on a support, in any of the configurations as has already been described. Such polymeric membranes are subsequently subjected to crosslinking by a combination of chemical reactions and heating. In acrylonitrile copolymers, the proportion of acrylonitrile is preferably at least about 20%, and most preferably at least about 50% by weight, of the total monomers. In place of acrylonitrile itself in these membrane-forming homo- and co-polymers, there may alternatively be used substituted acrylonitriles, e.g. C₁₋₆-alkylacrylonitriles such as methacrylonitrile and hexylacrylonitrile, arylacrylonitriles such as phenylacrylonitrile, haloacrylonitriles (in which halo signifies fluoro, chloro or bromo) such as fluoroacrylonitrile and chloroacrylonitrile, and thioacrylonitrile. Suitable comonomers which can be copolymerized with acrylonitriles and substituted acrylonitriles include monomers which may contain hydrophobic, hydrophilic, polar or ionic groups, especially, e.g., vinyl esters having 2 to 18 carbon atoms in the acid moiety, such as vinyl acetate; vinyl ethers having 3 to 12 carbon atoms; vinylpyridine; vinyl chloride; styrene; and acrylic and methacrylic acids and esters thereof having e.g. 1 to 4 carbon atoms in the ester moiety. Further suitable comonomers are maleic anhydride; 2-aminoethyl methacrylate; allyl compounds such as allyl alcohol, allyl- and methallylsulfonic acids and their salts (e.g. alkali metal salts), allyl and methallyl halides, allylamines and allyl p-toluenesulfonate. The term "acrylonitrile (or substituted acrylonitrile) copolymers" is intended to include such copolymers comprising more than 2 monomers, e.g. terpolymers such as acrylonitrile/styrene/butadiene ("ABS polymers"), acrylonitrile/methyl methacrylate/vinyl acetate and acrylonitrile/methyl methacrylate/sodium allylsulfonate, and quadripolymers. The underlying membrane may also be made from mixtures of acrylonitrile (or substituted acrylonitrile) homopolymers and/or copolymers.

The membrane derived from acrylonitrile (or substituted acrylonitrile) -derived polymers, once formed, is insolubilized by crosslinking, which may be effected with organic or inorganic bases, acids or free-radical initiators, followed by heating if necessary. Organic bases are preferably used for this purpose.

The term "organic bases" in this context includes amines, and in particular metal C₁₋₁₀ straight or branched chain alkoxides such as sodium or potassium methoxide, ethoxide, propoxide, isopropoxide, butoxide or tert.-butoxide. Also preferred are inorganic bases e.g. alkali metal hydroxides such as sodium or potassium hydroxide. In general, the metal alkoxides are utilized in alcoholic medium, while the alkali metal hydroxides are utilized in aqueous medium. In either case, the concentrations of the bases may vary in the range of from about 0.01 to about 50%, preferably from about 0.05 to about 20%, most preferably from about 0.1 to about 1% wt./vol. Other utilizable inorganic bases are ammonia and alkali metal amides.

Thus, for example, the membrane may be immersed in a solution of a base such as sodium or potassium alkoxide, or NaOH or KOH, at a concentration of between about 0.05 and about 1.0% wt./vol. in methanol or ethanol, for the alkoxide bases, and between about 1 and about 20% wt./vol. for the hydroxide bases in water, for a time which lies between about 5 minutes and about 8 hours, preferably at a minimum temperature of about 15°C, most preferably at least about 30°C, and up to about the reflux temperature of the particular solvent used.

A person skilled in the art may readily determine the times required for treating the membrane with bases in order that the product will not swell to an undesirable extent when immersed in solvents such as dimethyl formamide (DMF) or 1-methylpyrrolidin-2-one (NMP); it is preferred that such swelling is no more than about 50%, more preferably no more than about 15%, and especially no more than about 5%. Following the treatment just described, the membrane is drained and heated at an elevated temperature, e.g. by placing in an oven at a temperature which is gradually raised from about 10°C above room temperature to (say) about 110 to about 130°C. The purpose of effecting at least some crosslinking prior to heating above the glass transition point of the membrane is to prevent plastic flow and closing of the membrane pore structure. While some closure may be tolerated and in fact be desirable, in order to improve rejection, this should not lower water flux below economically acceptable levels for the given application. The flux level is best controlled by crosslinking as much as possible before the step of heating at an elevated temperature, as described above.

After heating to (say) about 110 to about 130°C, the membrane may be further insolubilized or crosslinked by heating (e.g. in air) in the region of about 250°C for a time period of several minutes up to several hours, but this must be done carefully to prevent compaction. If desired, the membrane may be carbonized by heating in a non-reactive environment to say, about 600 to 1000°C; for this purpose, it is preferred that the membrane is in the form of hollow fibers or is a planar membrane, and is supported by porous ceramic, carbon or metal tubelets, or plates. Preferably, the crosslinking step may be carried out on a copolymer of polyacrylonitrile with acrylic acid or itaconic acid, which are known to accelerate the crosslinking reaction.

Crosslinking the (optionally substituted) acrylonitrile-derived polymer of the membrane may alternatively be effected by use of organic or inorganic acids (including Lewis acids) such as hydrogen halides (e.g. HBr), p-toluenesulfonic acid, stannic chloride, aluminum halides (e.g. the trichloride, tribromide and triiodide) and zinc chloride.

The membranes according to the invention are useful for separating organic compounds of relatively low molecular weight from inorganic salts in aqueous solutions. The method for separating such compounds from these salts in aqueous solutions may be effected by disposing such solutions on one side of the coated membrane according to the invention, and filtering the solutions through the membrane, while applying a hydraulic pressure greater than the osmotic pressure against such solutions in contact with the coated membrane.

The molecular weight range of the organic compounds to be separated by the coated membranes of the parent patent application may be less than about 10,000, i.e. the membrane in such a case will have a cutoff level of about 10,000. The present i.e. uncoated membranes may have cutoffs ranging from 5 µm (microns) down to 1 nanometer. These uncoated but crosslinked membranes of polyacrylonitrile may be used for the above separations if such membranes are in the proper cutoff range; they may also be used for ultrafiltration or microfiltration if their cutoffs are above 10,000 MW. These membranes are characterized by their solvent insensitivity.

The inorganic salts present in the solutions which are subjected to treatment at the coated membrane (i.e. reverse osmosis) are generally alkali metal salts such as alkali metal halides or sulfates, e.g. sodium chloride and sodium sulfate.

The membranes of the invention are highly suitable for the separation processes of the type described, and especially ultra attraction reverse osmosis processes. They can be prepared and used as flat or tubular membranes in appropriate separation devices, such as modules. They have superior rejection to organic compounds of low molecular weight, good flux properties, superior flexibility and high overall stabilities, such as resistance to compaction, and to chemical and biological degradation, and solvents. Because of this solvent resistance, the crosslinked polyacrylonitrile membranes may be used for filtering organic solvents from soluble matter and particles.

The separation effect (the rejection) of the membranes of the invention can be measured as follows. A circular membrane with a surface area of 13 cm.², resting on a sintered stainless steel disc is placed in a cylindrical cell made of stainless steel. 150 ml. of the solution to be tested, which contains the substance to be tested in a concentration C1 (g./g. solution), are introduced onto the test membrane, and subjected to a pressure of 40 bars using nitrogen. The solution is stirred mechanically. The liquid which collects on the outlet side of the membrane is examined in order to determine its content, i.e. the concentration C2 of the substance under test. 3 x 5 ml. samples were tested. In general, the amount which flows through the membrane and the composition of the three initial samples are constant. The % rejection can be calculated from the values obtained, using the equation: R = 100(C1 - C2)/C1. The amount of the material which passes through the membrane per surface area unit and time unit (called the "flux") is expressed as follows: Γ = V.S⁻¹.t⁻¹, , where V = volume, S = membrane surface area and t = time. As an approximation, Γ may be expressed as m³/m².d, i.e. the number of cubic meters per square meter of membrane surface area per day, or as l/m².h, i.e. liters per square meter of membrane surface area per hour.

In addition to the measurements on flat membranes, measurements on tubular membranes 60 cm. in length, and having an outer diameter of 1.4 cm., are also carried out. For this purpose, these tubular membranes are placed in a perforated tube made of stainless steel. The whole is placed in a tube made of polycarbonate. The outflow from the membrane is between this outer polycarbonate tube and the steel tube. A stream of solution is added in turbulent or laminar flow, under pressure. The flow is kept constant at 10-15 l. per minute. The rejection (R) and the flux (Γ) are calculated in the same way as for the flat membranes.

The membranes of the invention may also be utilized in a process for separating insoluble particles, colloidal particles and solute molecules from an organic solvent, which comprises contacting a solvent containing such components with these membranes under a superatmospheric pressure greater than the osmotic pressure. Preferred organic solvents are alcohols, ethers, dimethylformamide, N-methylpyrrolidone and dimethyl sulfoxide.

The present membranes may be further utilized in a process for separating by retention at such membranes of high molecular weight insoluble particles, colloidal particles and soluble polymers from aqueous media, while permitting the passage therethrough of any dissolved salts and organic compounds having a molecular weight less than 5000. The process is effected under a superatmospheric pressure greater than the osmotic pressure. The aqueous media may for example be juices and other extracts of fruit and vegetable origin.

The preparation and utility of the membranes of the invention will now be illustrated by the following non-limitative Examples.

### EXAMPLE 1

Polyacrylonitrile (98% homopolymer: DuPont A), MW (number average) 50,000, was dissolved in DMF and bob cast onto a tube of nonwoven polyester (1.27 cm. diameter) and gelled in ice-water. After washing overnight, the membrane had a 65% rejection to polyethylene glycol of 60K MW, and 5% rejection to sucrose. The polyacrylonitrile membrane was crosslinked by immersion for 5 minutes in 1% wt./vol. sodium ethoxide, drained and then heated to 115°C for 30 minutes. The original membrane was off-white or beige, but after this treatment, the membrane was dark brown, and it was no longer soluble or swellable in DMF, NMP or DMSO. While the original membrane had less than 18% rejection to raffinose, the crosslinked membrane had a rejection of 45% to raffinose and a 94% rejection to dextran 70K. The crosslinked membrane clarified a cloudy solution of orange peel extract with a flux of 650 l./m²/day; the crosslinking made the membrane insensitive to terpenes in this fruit extract which usually have deleterious effects on non-crosslinked membranes. The crosslinked membrane was subsequently coated and crosslinked with the quaternized polymer obtained in Preparation B of the parent application, and then had a rejection to raffinose above 60%, with sodium chloride passage of less than 20%; its rejection to Congo Red was above 90%.

### EXAMPLE 2

An uncoated membrane was made of polyacrylonitrile as described in Example 1, and coated and crosslinked as in Example 4 of the parent application. The resultant crosslinked coated membrane had a rejection of 82% to raffinose, with a flux of 1200 l./m²/day, and sodium chloride rejection of 18%.

### EXAMPLE 3

Example 2 was repeated except that the polyacrylonitrile support was crosslinked by placing the membrane in 10% aqueous NaOH solution for 15 minutes at 20°C, rinsing and heating to 110°C for 20 minutes. The rejection to raffinose is 85%, while the membranes are insoluble and swell less than 10% in N,N-dimethylformamide, NMP, DMSO, methylenechloride, toluene and acetone, even after immersion for more than one week, and showed the same performance as when tested initially.

An uncoated membrane prepared as described in Example 1 was coated with a 1% solution of the bromomethylated polymer of Preparation A of the parent application in methylene chloride. The coated membrane was immersed in an aqueous solution of diaminoethane for 12 hours to crosslink the coating. The product was drained, dried, and immersed in a 1% chlorosulfonic acid solution in methylene chloride for 2 minutes, washed with aqueous ethanol. and then dried. The sulfonated membrane had a rejection of 84% to raffinose, with 29% rejection to sodium chloride. When the membrane was placed in 5% triethylamine in 1:1 aqueous ethanol for 12 hours, washed and drained, it gave 70% rejection to raffinose and 18% rejection to sodium chloride. This final membrane contains both anionic and cationic groups.

### EXAMPLE 4

An uncoated membrane prepared as described in Example 1 was coated with a 1% solution of the bromomethylated polymer of Preparation A of the parent application in methylene chloride. The coated membrane was immersed in an aqueous solution of diaminoethane for 12 hours to crosslink the coating. The product was drained, dried, and immersed in a 1% chlorosulfonic acid solution in methylene chloride for 2 minutes, washed in ethanol, and then dried. The sulfonated membrane had a rejection of 84% to raffinose, with 29% rejection to sodium chloride. Then the membrane was placed in 5% ethylamine in 1:1 aqueous ethanol for 12 hours, washed and drained, it gave 70% rejection to raffinose and 18% rejection to sodium chloride. This final membrane contains both anionic and cationic groups.

### EXAMPLE 5

Example 4 was repeated using the uncoated membrane of Example 3, but the methylene chloride solution of bromomethylated polymer contained 0.5% SnCl₄. After effecting coating on the crosslinked support, the membrane was heated at 110°C for 10 minutes, cooled and the series of steps effected as stated in Example 4, without diaminoethane, but including chlorosulfonic acid treatment, and quaternization, giving a crosslinked amphoteric coating with 90% rejection to Congo Red.

### EXAMPLE 6

Example 4 was repeated using tetrahydrofuran instead of methylene chloride, to give similar results.

### EXAMPLE 7

Example 4 was repeated, but with 0.5% bromomethylated polyphenylene oxide. After the diaminoethane step, the membrane had a flux of 650 l./m²/day and 75% rejection to raffinose. The crosslinked polyacrylonitrile membrane prior to coating had a flux of 3312 l./m²/day and 80% rejection to Congo Red.

### EXAMPLE 8

Example 4 was repeated using sodium butoxide instead of sodium ethoxide, with similar flux and rejection results.

### EXAMPLE 9

Example 8 was repeated using sodium methoxide instead of butoxide. The extent of crosslinking was less than when either ethoxide or butoxide were used. The crosslinked coated membranes had similar flux rejection properties.

### EXAMPLE 10

A polyacrylonitrile membrane as described in Example 1 was cast into a tubelet of microporous alumina ceramic; the membrane on the ceramic had a cutoff 70% to 70K Dextran. After insolubilizing as described, the membrane had a water flux and rejection to raffinose, of 1400 l./m²/day and 68%, respectively. A similar membrane was further heated in air to 260°C and kept at this temperature for 2 hours, to further crosslink the polyacrylonitrile. The resultant non-coated membrane had a rejection to sucrose of 57% and was dark black (as compared to dark brown of the membrane heated to 130°C); it was carbonized by heating slowly to 700°C and then had a rejection of 40% to sucrose. All three different types of membranes were coated by the procedure of Example 4 of the parent application and present Example 5, and gave rejections to raffinose in the range of 85-95%.

### EXAMPLE 11

Example 10 was repeated using a porous carbon tube coated with zirconia, the product having a molecular weight cutoff of 100,000. After coating and crosslinking, the resulting membranes had sucrose rejections above 50% and sodium chloride rejections of less than 20%.

### EXAMPLE 12

Example 10 is repeated on polyacrylonitrile hollow fibre, with 80 µm (microns) internal diameter and wall thickness of 20 µm (microns), with a rejection to sucrose of 35%. After the processes described in Example 1, the result showed 60% rejection to sucrose and 90% to Congo Red. When the base membrane was further heated to 250°C for 2 hours and then coated, the rejection to Congo Red was 87%. When the membranes were carbonized at 700° in nitrogen, the coated membrane gave 80% rejection to Congo Red.

### EXAMPLE 13

The crosslinked and insolubilized polyacrylonitrile membrane of Example 1 is coated with a 1% solution of sulfonated polyvinylidene fluoride (1.6 meq. sulfonic groups/g. polymer) in DMF, drained and heated at 110°C for 5 seconds. The membrane was then immersed in a 50% aqueous ethylenediamine solution for 2 hours, drained, immersed in water and tested. The resulting membrane had a 90% rejection to Congo Red. When as the support membrane instead of polyacrylonitrile, there was used a sulfonated polyvinylidene fluoride membrane, the final membrane had a 96% rejection to Congo Red.

Membranes from different Examples were tested for stability in solvents, acids and bases. The results showed good solvent stability for the crosslinked polyacrylonitrile. The solvents used for testing stability were N,N-dimethylformamide, NMP, DMSO, toluene, methylenechloride, methylethylketone, ethanol, acetone and hexane. The crosslinked polyacrylonitrile membranes showed initial performance of flow and rejection, even after solvent immersion for more than one week.

## Claims

1. A membrane which is useful as the underlying membrane in a composite membrane formed by coating an underlying membrane and subjecting the coated membrane to a crosslinking treatment, and which comprises at least one member selected from the group consisting of microfiltration, ultrafiltration and reverse osmosis membranes, said at least one member being carbonized and non-carbonized crosslinked materials selected from acrylonitrile homopolymers, copolymers, terpolymers and quadripolymers and substituted acrylonitrile homopolymers, copolymers, terpolmers and quadripolymers, the carbonized cross-linked materials having been obtained from non-carbonized crosslinked materials by a process including the step of heating the corresponding crosslinked material in a non-reactive environment subsequent to crosslinking;
said copolymers having been obtained by reaction of acrylonitrile or substituted acrylonitrile or a mixture thereof with a comonomer selected from vinyl esters having 2 to 18 carbon atoms in the acid moiety, vinyl ethers having 3 to 12 carbon atoms, vinyl chloride, styrene, acrylic and methacrylic acids and esters thereof having 1 to 4 carbon atoms in the ester moiety, maleic anhydride, 2-aminoethyl methacrylate, allyl alcohol, allyl- and methallylsulfonic acids and their salts, allyl and methallyl halides, allylamines and allyl p-toluenesulfonate;
the crosslinking of said underlying membrane having been effected by heating and/or reacting the corresponding non-crosslinked acrylonitrile- or substituted acrylonitrile-derived membrane with a reactant selected from organic bases, alkali metal hydroxides or amides, ammonia, inorganic bases other than hydroxylamine organic acids, inorganic acids, Lewis acids and free-radical initiators.

2. A membrane according to claim 1, which has been initially formed from at least one member selected from the group consisting of non-crosslinked acrylonitrile homopolymers and copolymers, and non-crosslinked substituted acrylonitrile homopolymers and copolymers, and has been subjected to at least one in situ treatment step in order to promote crosslinking of said at least one member.

3. A membrane according to claim 2, wherein said at least one in situ treatment step comprises at least one of the following steps, provided that when said at least one step comprises a plurality of steps, then the latter are effected in the stated sequence commencing with any of steps (a), (b) or (c):
(a) treatment with at least one alkali metal hydroxide;
(b) treatment with a member selected from the group consisting of free radical initiators, acids, and bases other than alkali metal hydroxides;
(c) heating at a temperature below 130°C;
(d) heating at a temperature in the region of 110 to 130°C;
(e) heating at a temperature above 130°C and below 250°C;
(f) heating at a temperature in the region of about 250°C;
(g) heating at a temperature above 250°C and below 600°C;
(h) heating at a temperature within the range of from 600°C to 1000°C;
and the thus-obtained membrane is cooled to a temperature at most 130°C.

4. A membrane according to claim 1, wherein in said substituted acrylonitrile, said substituent is selected from the group consisting of alkyl, aryl, halogen and thio.

5. A membrane according to any one of claims 1 to 4, which has a thickness within the range of from 10 µm to 1 mm, an average pore size in the range of from 1 nm (10 Å) to 5 µm, and a porosity of at least about 10%.

6. A membrane according to claim 5, which has a thickness within the range of from 100 µm to 500 µm, an average pore size in the range of from 2 nm (20 Å) to 100 nm (1000 Å) and a porosity of greater than about 50%.

7. A membrane according to any one of claims 1 to 6, which is supported on a porous substrate.

8. A membrane according to claim 7, wherein said porous substrate is fabricated from at least one member selected from the group consisting of non-woven and woven cellulosics, polyethylene, polypropylene, nylon, vinyl chloride homo- and co-polymers, polystyrene, polyesters such as polyethylene terephthalate, polyvinylidene fluoride, polytetrafluoroethylene, glass fibers, porous carbon, graphite, inorganic substrates based on alumina and/or silica, and such inorganic substrates coated with zirconium oxides.

9. A membrane according to any one of claims 1 to 8, which is formed as a hollow fiber or tubelet, or is planar.

10. A process for separating at least one member selected from the group consisting of insoluble particles, colloidal particles and solute molecules from an organic solvent, which comprises contacting said solvent containing at least one said member under a superatmospheric pressure greater than the osmotic pressure with a membrane as defined in any one of claims 1 to 9, and thereafter recovering the thus treated solvent.

11. A process according to claim 10, wherein said organic solvent comprises at least one member selected from the group consisting of alcohols, ethers, dimethylformamide, N-methylpyrrolidone and dimethyl sulfoxide.

12. A process for separating by retention at a membrane of at least one member of high molecular weight selected from the group consisting of insoluble particles, colloidal particles and soluble polymers from aqueous media, while permitting the passage therethrough of any dissolved salts and organic compounds having a molecular weight less than 5000, which comprises contacting said media containing at least one said member under a superatmospheric pressure greater than the osmotic pressure with a membrane as defined in any one of claims 1 to 9, and thereafter recovering the thus treated media.

13. A process according to claim 12, wherein said media are selected from the group consisting of juices and other extracts of fruit and vegetable origin.

## Patentansprüche

1. Membran, die als unterliegende Membran in einer durch Beschichten einer unterliegenden Membran und Vernetzungsbehandlung der beschichteten Membran gebildeten Kompositmembran verwendbar ist und die mindestens ein Mitglied, ausgewählt aus der Gruppe, bestehend aus Mikrofiltrations-, Ultrafiltrations- und Umkehrosmose-Membranen, umfasst, wobei das mindestens eine Mitglied carbonisiertes oder nicht-carbonisiertes vernetztes Material, ausgewählt aus Homopolymeren, Copolymeren, Terpolymeren und Quadripolymeren von Acrylnitril und Homopolymeren, Copolymeren, Terpolymeren und Quadripolymeren von substituiertem Acrylnitril, ist, wobei die carbonisierten vernetzten Materialien aus nicht-carbonisierten vernetzten Materialien durch ein Verfahren, umfassend den Schritt des Erhitzens des entsprechenden vernetzten Materials in einer nicht-reaktiven Umgebung nach Vernetzung, erhalten worden sind;
wobei besagte Copolymere durch Reaktion von Acrylnitril oder substituiertem Acrylnitril oder eines Gemisches davon mit einem Comonomer, ausgewählt aus Vinylestern mit 2 bis 18 Kohlenstoffatomen im Säureteil, Vinylethern mit 3 bis 12 Kohlenstoffatomen, Vinylchlorid, Styrol, Acryl- und Methacrylsäuren und Estern davon mit 1 bis 4 Kohlenstoffatomen im Esterteil, Maleinsäureanhydrid, 2-Aminoethyl-methacrylat, Allylalkohol, Allyl- und Methallylsulfonsäuren und ihre Salze, Allyl- und Methallylhalogenide, Allylamine und Allyl-p-toluolsulfonat, erhalten worden sind;
wobei die Vernetzung besagter unterliegender Membran durch Erhitzen und/oder Umsetzen der entsprechenden nicht-vernetzten, von Acrylnitril oder substituiertem Acrylnitril abgeleiteten Membran mit einem Reaktionspartner, ausgewählt aus organischen Basen, Alkalimetallhydroxiden oder -amiden, Ammoniak, von Hydroxylamin verschiedenen anorganischen Basen, organischen Säuren, anorganischen Säuren, Lewis-Säuren und Radikalinitiatoren, bewirkt worden ist.

2. Membran nach Anspruch 1, die zuerst aus mindestens einem Mitglied, ausgewählt aus der Gruppe, bestehend aus nicht-vernetzten Homopolymeren und Copolymeren von Acrylnitril und nicht-vernetzten Homopolymeren und -Copolymeren von substituiertem Acrylnitril, gebildet worden ist und mindestens einem in-situ-Behandlungsschritt unterworfen worden ist, um die Vernetzung des mindestens einen Mitglieds zu fördern.

3. Membran nach Anspruch 2, worin der mindestens eine in-situ-Behandlungsschritt mindestens einen der folgenden Schritte mit der Massgabe umfasst, dass, wenn der mindestens eine Schritt eine Mehrzahl von Schritten umfasst, diese in der angegebenen Reihenfolge, beginnend mit einem der Schritte (a), (b) oder (c), ausgeführt werden:
(a) Behandlung mit mindestens einem Alkalimetallhydroxid;
(b) Behandlung mit einem Mitglied, ausgewählt aus der Gruppe, bestehend aus Radikalinitiatoren, Säuren und von Alkalimetallhydroxiden verschiedenen Basen;
(c) Erhitzen auf eine Temperatur unter 130°C;
(d) Erhitzen auf eine Temperatur im Bereich von 110 bis 130°C;
(e) Erhitzen auf eine Temperatur über 130°C und unter 250°C;
(f) Erhitzen auf eine Temperatur im Bereich von etwa 250°C;
(g) Erhitzen auf eine Temperatur über 250°C und unter 600°C;
(h) Erhitzen auf eine Temperatur im Bereich von 600°C bis 1000°C;
und die so erhaltene Membran auf eine Temperatur von höchstens 130°C gekühlt wird.

4. Membran nach Anspruch 1, worin der Substituent in besagtem substituiertem Acrylnitril aus der Gruppe, bestehend aus Alkyl, Aryl, Halogen und Thio, ausgewählt ist.

5. Membran nach einem der Ansprüche 1 bis 4, die eine Dicke im Bereich von 10 µm bis 1 mm, eine mittlere Porengrösse im Bereich von 1 nm (10 Å) bis 5 µm und eine Porosität von mindestens etwa 10% aufweist.

6. Membran nach Anspruch 5, die eine Dicke im Bereich von 100 µm bis 500 µm, eine mittlere Porengrösse im Bereich von 2 nm (20 Å) bis 100 nm (1000 Å) und eine Porosität grösser als etwa 50% aufweist.

7. Membran nach einem der Ansprüche 1 bis 6, die auf einem porösen Substrat plaziert ist.

8. Membran nach Anspruch 7, worin das poröse Substrat aus mindestens einem Mitglied, ausgewählt aus der Gruppe, bestehend nicht-gewebten und gewebten Cellulosederivaten, Polyethylen, Polypropylen, Nylon, Vinylchlorid-Homo- und -Copolymeren, Polystyrol, Polyestern wie Polyethylenterephthalat, Polyvinylidenfluorid, Polytetrafluorethylen, Glasfasern, porösem Kohlenstoff, Graphit, auf Aluminiumoxid und/oder Siliciumoxid basierenden anorganischen Substraten und solchen anorganischen Substraten, die mit Zirkoniumoxiden beschichtet sind, hergestellt ist.

9. Membran nach einem der Ansprüche 1 bis 8, die als Hohlfaser oder Röhrchen ausgebildet oder planar ist.

10. Verfahren zum Abtrennen mindestens eines Mitglieds, ausgewählt aus der Gruppe, bestehend aus unlöslichen Partikeln, kolloidalen Partikeln und Molekülen gelösten Stoffes, aus einem organischen Lösungsmittel, umfassend In-Kontakt-Bringen des besagten Lösungsmittels, enthaltend mindestens eines der besagten Mitglieder, mit einer Membran, wie in einem der Ansprüche 1 bis 9 definiert, unter einem überatmosphärischen Druck grösser als der osmotische Druck und danach Rückgewinnung des so behandelten Lösungsmittels.

11. Verfahren nach Anspruch 10, worin besagtes organisches Lösungsmittel mindestens ein Mitglied, ausgewählt aus der Gruppe, bestehend aus Alkoholen, Ethern, Dimethylformamid, N-Methylpyrrolidon und Dimethylsulfoxid, umfasst.

12. Verfahren zum Abtrennen mindestens eines Mitglieds hohen Molekulargewichts, ausgewählt aus der Gruppe, bestehend aus unlöslichen Partikeln, kolloidalen Partikeln und löslichen Polymeren, aus wässrigen Medien durch Zurückhalten an einer Membran, während der Durchtritt irgendwelcher gelöster Salze und organischer Verbindungen mit einem Molekulargewicht von weniger als 5000 gestattet ist, wobei das Verfahren In-Kontakt-Bringen besagter Medien, enthaltend mindestens eines der besagten Mitglieder, mit einer Membran, wie in einem der Ansprüche 1 bis 9 definiert, unter einem überatmosphärischen Druck grösser als der osmotische Druck und danach Rückgewinnung der so behandelten Medien umfasst.

13. Verfahren nach Anspruch 12, worin besagte Medien aus der Gruppe, bestehend aus Säften und anderen Extrakten von Früchten oder pflanzlicher Herkunft, ausgewählt sind.

## Revendications

1. Membrane utilisable comme membrane sous-jacente dans une membrane composite formée en revêtant une membrane sous-jacente et en soumettant la membrane revêtue à un traitement de réticulation et qui comprend au moins un membre choisi dans le groupe consistant en membranes de microfiltration, d'ultrafiltration et d'osmose inverse, ledit membre étant fait de substances réticulées carbonisées et non carbonisées choisies parmi les homopolymères, copolymères, terpolymères et quadripolymères d'acrylonitrile et les homopolymères, copolymères, terpolymères et quadripolymères d'acrylonitrile substitué, les substances réticulées carbonisées ayant été obtenues à partir de substances réticulées non carbonisées par un procédé comprenant l'étape de chauffage de la substance réticulée correspondante dans un milieu non réactif après la réticulation;
lesdits copolymères ayant été obtenus en faisant réagir l'acrylonitrile ou un acrylonitrile substitué ou un mélange de ceux-ci avec un comonomère choisi parmi les esters vinyliques comprenant de 2 à 18 atomes de carbone dans la partie acide, les éthers vinyliques comprenant de 3 à 12 atomes de carbone, le chlorure de vinyle, le styrène, les acides acrylique et méthacrylique et les esters de ceux-ci comprenant de 1 à 4 atomes de carbone dans la partie ester, l'anhydride maléique, le méthacrylate de 2-aminoéthyle, l'alcool allylique, les acides allyl- et méthallylsulfonique et leurs sels, les halogénures d'allyle et de méthallyle, les amines allyliques et le p-toluènesulfonate d'allyle;
la réticulation de ladite membrane sous-jacente ayant été effectuée en chauffant et/ou en faisant réagir la membrane non réticulée correspondante à base d'acrylonitrile ou d'acrylonitrile substitué avec un réactif choisi parmi les bases organiques, les hydroxydes ou les amides de métal alcalin, l'ammoniac, les bases minérales autres que l'hydroxylamine, les acides organiques, les acides minéraux, les acides de Lewis et les initiateurs de radicaux libres.

2. Membrane selon la revendication 1, qui a été formée au début à partir d'au moins un membre choisi dans le groupe consistant en les homopolymères et les copolymères non réticulés d'acrylonitrile et les hompolymères et les copolymères non réticulés d'acrylonitrile substitué et qui a été soumise à au moins une étape de traitement *in situ* afin de promouvoir la réticulation dudit membre.

3. Membrane selon la revendication 2, dans laquelle ladite étape de traitement *in situ* comprend au moins l'une des étapes suivantes, avec la condition que, lorsque ladite étape comprend plusieurs étapes, les dernières de celles-ci sont effectuées dans l'ordre de succession commençant par l'une quelconque des étapes (a), (b) ou (c):
(a) le traitement par au moins un hydroxyde de métal alcalin;
(b) le traitement par un membre choisi dans le groupe consistant en les initiateurs de radicaux libres, les acides, et les bases autres que les hydroxydes de métal alcalin;
(c) le chauffage à une température inférieure à 130°C;
(d) le chauffage à une température dans la plage de 110 à 130°C;
(e) le chauffage à une température supérieure à 130°C et inférieure à 250°C;
(f) le chauffage à une température aux environs de 250°C;
(g) le chauffage à une température supérieure à 250°C et inférieure à 600°C;
(h) le chauffage à une température dans la plage de 600°C à 1000°C;
et la membrane ainsi obtenue est refroidie à une température d'au plus 130°C.

4. Membrane selon la revendication 1, dans laquelle ledit substituant dudit acrylonitrile substitué est choisi dans le groupe consistant en un alcoyle, un aryle, un halogène et le thio.

5. Membrane selon l'une quelconque des revendications 1 à 4, qui a une épaisseur dans la plage de 10 µm à 1 mm, une dimension moyenne de pores dans la plage de 1 nm (10 Å) à 5 µm et une porosité d'au moins environ 10%.

6. Membrane selon la revendication 5, qui a une épaisseur dans la plage de 100 µm à 500 µm, une dimension moyenne de pores dans la plage de 2 nm (20 Å) à 100 nm (1000 Å) et une porosité supérieure à environ 50%.

7. Membrane selon l'une quelconque des revendications 1 à 6, qui est placée sur un substrat poreux.

8. Membrane selon la revendication 7, dans laquelle ledit substrat poreux est fabriqué à partir d'au moins un membre choisi dans le groupe consistant en matières cellulosiques non tissées et tissées, polyéthylène, polypropylène, nylon, homopolymères et copolymères de chlorure de vinyle, polystyrène, polyesters tels que le téréphtalate de polyéthylène, fluorure de polyvinylidène, polytétrafluoréthylène, fibres de verre, carbone poreux, graphite, substrats minéraux à base d'alumine et/ou de silice et lesdits substrats minéraux revêtus d'oxydes de zirconium.

9. Membrane selon l'une quelconque des revendications 1 à 8, qui a la forme d'une fibre creuse ou une forme tubulaire ou qui est plane.

10. Procédé de séparation d'au moins un membre choisi dans le groupe consistant en particules insolubles, particules colloïdales et molécules dissoutes, à partir d'un solvant organique, selon lequel on met en contact ledit solvant, contenant au moins l'un desdits membres, sous une pression suratmosphérique supérieure à la pression osmotique, avec une membrane telle que défini dans l'une quelconque des revendications 1 à 9, et l'on recueille ensuite le solvant ainsi traité.

11. Procédé selon la revendication 10, dans lequel ledit solvant organique comprend au moins un membre choisi dans le groupe consistant en les alcools, les éthers, le diméthylformamide, la N-méthylpyrrolidone et le diméthyl sulfoxyde.

12. Procédé de séparation, par rétention sur une membrane, d'au moins un membre de poids moléculaire élevé choisi dans le groupe consistant en particules insolubles, particules colloïdales et polymères solubles, à partir d'un milieu aqueux, qui laisse passer toutefois au travers tous sels et composés organiques dissous quelconques d'un poids moléculaire inférieur à 5000, selon lequel on met en contact ledit milieu contenant au moins l'un desdits membres, sous une pression suratmosphérique supérieure à la pression osmotique, avec une membrane telle que défini dans l'une quelconque des revendications 1 à 9, et l'on recueille ensuite le milieu ainsi traité.

13. Procédé selon la revendication 12, dans lequel ledit milieu est choisi dans le groupe consistant en jus et autres extraits de fruits et d'origine végétale.
